Europaisches Patentamt

**European Patent Office**

**Office européen des brevets**

(19)

(11) Numéro de publication: **0 035 449**
A1

(12)

# DEMANDE DE BREVET EUROPEEN

(21) Numéro de dépôt: **81400303.4**

(22) Date de dépôt: **27.02.81**

(51) Int. Cl.³: **B 62 D 25/20,** B 62 D 27/06, B 62 D 33/02

(30) Priorité: **28.02.80 FR 8005102**

(43) Date de publication de la demande: **09.09.81** Bulletin **81/36**

(84) Etats contractants désignés: **AT BE DE IT**

(71) Demandeur: Société **NOUVELLE CARROSSERIE CARRIER S.A, B.P 158 181, rue d'Argentan Zone Industrielle, F-61005 Alencon (FR)**

(72) Inventeur: **Mallet, Jean-Marie, 21 rue Albert 1er, F-61000 Alencon (FR)**

(74) Mandataire: **Ecrepont, Robert, Cabinet Ecrepont 12 Place Simon Vollant (Porte de Paris), F-59800 Lille (FR)**

(54) **Plateau de chargement adaptable aux longerons d'un châssis et véhicule pourvu d'un tel plateau.**

(57) L'invention se rapporte à un plateau de chargement adaptable aux longerons du châssis d'un engin tracteur.

Il est caractérisé en ce que les traverses (9, 10) du plateau (1) s'appliquent directement sur les câles en bois (15, 16) tapissant la face supérieure des longerons (2, 3).

Application à l'industrie de la carrosserie automobile.

1

## PLATEAU DE CHARGEMENT ADAPTABLE AUX LONGERONS D'UN CHASSIS ET VEHICULE POURVU D'UN TEL PLATEAU.

L'invention se rapporte à un plateau de chargement adaptable aux longerons du châssis d'un engin tracteur tel un camion et au véhicule pourvu d'un tel plateau.

A ce jour, du fait de leur plancher plat, sans décrochement pour débattement des roues, de tels plateaux sont déjà largement utilisés et ce, que ce soit en plateau nu, avec ou sans hayon avant, ou après avoir reçu un hayon avant et arrière ainsi que des ridelles, éventuellement rabattables et réhaussables et/ou après avoir été bâché à l'aide d'arceaux, de préférence coulissants.

Ces plateaux connus comprennent un plancher, constitué d'une tôle ou de lattes de bois, associé à une ossature généralement formée de deux brancards reliés par des traverses judicieusement espacées, telle que par exemple en profilé ayant une section en U placé de champ, laquelle tôle, en plus du raidissage transversal que lui procure les traverses, est raidie longitudinalement par des lisses réparties et soudées sur sa face supérieure et par exemple formées par des profilés ayant une section dite en oméga.

Les brancards du plateau ayant un écartement nettement supérieur à celui des longerons du châssis, dans toutes les réalisations connues, il a été jugé indispensable de fixer longitudinalement sous les traverses deux poutrelles dont l'écartement correspond à celui de ces longerons de châssis et sur lesquels ils prennent alors appui.

Le rôle de ces poutrelles serait, lors des accélérations décélérations et cahots, de répartir, sur toutes les traverses, les sollicitations longitudinales que celles-ci reçoivent directement du fait de leur position transversale et qui, à partir d'une certaine intensité pourraient les déformer, du fait de la hauteur de leur âme reliant les deuxblocs que forment, d'une part l'engin tracteur, et d'autre part le plateau et sa charge, auxquels blocs, les dites traverses sont fixées respectivement, par leurs rives inférieure et supérieure.·

Malheureusement, ces poutrelles alourdissent le plateau et surtout en majorent le prix de revient.

Un résultat que l'invention vise à obtenir est un tel plateau, pourvu de moyens qui, tout en permettant aux traverses de résister aux sollicitations en déformation, n'alourdissent pas le plateau et n'en majorent pas le prix de revient. A cet effet, elle a pour objet un plateau du type cité plus haut, notamment caractérisé :

- d'une part, en ce qu'il comprend :
  - deux longrines qui entretoisent longitudinalement deux traverses successives du plateau et ce chacune au moins sensiblement dans l'un des deux plans verticaux passant chacun par l'un des longerons du châssis,
  - une câle en bois tapissant la face supérieure de chaque longeron,
  - des corbeaux ayant chacun leur face d'appui qui est située à un niveau légèrement inférieur à celui de la face supérieure des câles alors que leur semelle est fixée à l'un des longerons au long de chacun desquels ces corbeaux sont répartis selon le même espacement que certaines au moins des traverses. - et, d'autre part, en ce que les traverses du plateau s'appliquent directement sur les câles en bois sur lesquelles elles sont

énergiquement maintenues par leur fixation sur la face d'appui des dits corbeaux.

Elle a également pour objet, le véhicule pourvu d'un tel plateau.

L'invention sera bien comprise à l'aide de la description ci-après faite à titre d'exemple non limitatif, en regard du dessin ci-annexé, qui représente schématiquement :
- figure 1 : un plateau nu vu de profil,
- figure 2 : ce plateau en vue partielle de dessus,
- figure 3 : ce plateau vu en coupe transversale,
- figure 4 : vu partiellement et en perspective, le plateau monté sur les longerons.

Ce plateau de chargement 1, adaptable aux longerons 2, 3 du châssis 4 d'un engin tracteur (non représenté), comprend un plancher 5 constitué par une tôle disposée et soudée sur une ossature 6 formée de deux brancards 7, 8 reliés par des traverses d'extrémités 9 et des traverses intermédiaires 10. Ces traverses 9, 10 sont par exemple en profilés ayant une section en U placé de côté.

En plus du raidissage transversal que lui procurent les traverses 9, 10, cette tôle 5 est raidie longitudinalement par des lisses 11, 12, réparties et soudées sur sa face supérieure et par exemple formées de profilés ayant une section dite en oméga.

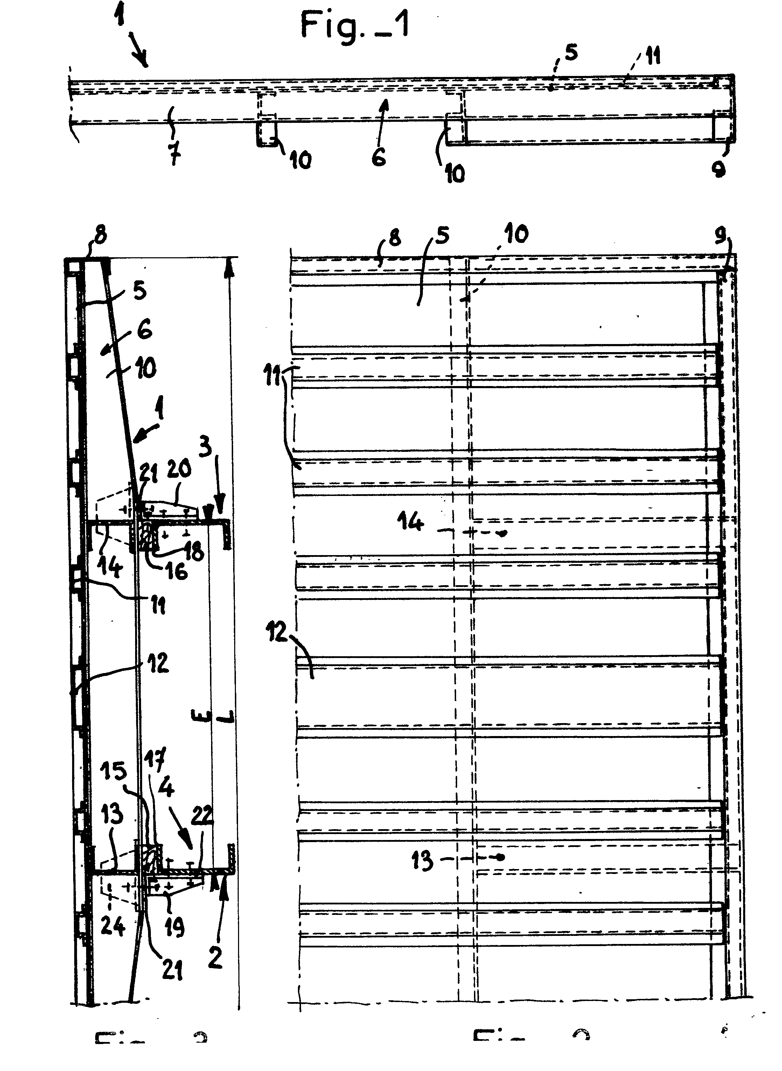

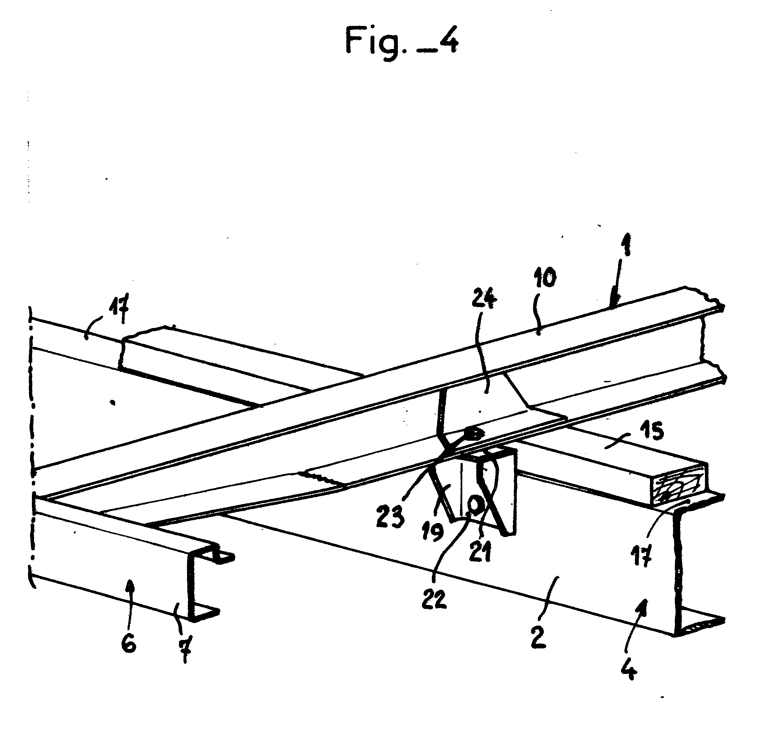

On remarque en figure 3, que les brancards 7, 8 sont situés sur les bords du plateau 1 qui a une largeur "L" qui est nettement supérieure à l'écartement "E" des longerons 2, 3 du châssis.

De ce fait, ce plateau comporte encore des moyens qui, malgré la saisie des traverses 9, 10 à grande distance des brancards 2, 3 font que ces traverses ne seront pas déformées en cas de sollicitations longitudinales.

Ces moyens comprennent tout d'abord deux longrines 13, 14, qui entretoisent longitudinalement deux traverses successives 9, 10 et ce chacune au moins sensiblement dans l'un des deux plans verticaux passant par les longerons 2, 3 (voir figure 3).

4          0035449

Avantageusement, ces moyens comprendront également deux câles en bois 15, 16 tapissant chacun la face supérieure 17, 18 de l'un des longerons.

Ces moyens comprennent enfin des corbeaux 19, 20 présentant chacun une face d'appui 21 qui est située à un niveau légèrement inférieur à celui de la face supérieure des câles 15, 16 ainsi qu'une semelle 22 fixée à l'un des longerons. Ces corbeaux sont répartis au long des deux longerons selon le même espacement que certaines au moins des traverses 9, 10.

Lors du montage d'un tel plateau 1, ses traverses 9, 10 s'appliquent directement sur les câles en bois sur lesquelles elles sont énergiquement maintenues par leur fixation, par exemple par boulon 23, sur la face d'appui 21 des corbeaux. L'inventeur a en effet constaté que pour éviter la déformation de toutes les traverses, il n'était pas nécessaire d'agir sur toutes ces traverses mais qu'il suffisait d'empêcher une ou plusieurs traverses de se déformer. Il était donc inutile de prévoir des poutrelles courant en les reliant sous toutes les traverses.

De plus, au droit de leur fixation sur les corbeaux, les traverses peuvent avantageusement être raidies par des renforts 24.

0035449

REVENDICATIONS DE BREVET

1. Plateau (1) adaptable aux longerons (2, 3) du châssis (4) d'un engin tracteur, comprenant, d'une part, un plancher (5) constitué par une tôle raidie longitudinalement par des lisses (11, 12) réparties et soudées sur la face supérieure de la dite tôle qui est, par ailleurs, disposée et soudée sur une ossature (6) formée de deux brancards (7, 8) reliés par des traverses d'extrémité (9) et des traverses intermédiaires (10) et, d'autre part, des longrines (13, 14) situés sensiblement dans les plans verticaux des longerons (2, 3) dont la face supérieure (17, 18) est éventuellement tapissée d'une câle en bois (15, 16), ce plateau étant C A R A C T E R I S E :

- d'une part, en ce que ses longrines (13, 14) ne s'étendent longitudinalement qu'entre deux des traverses (9, 10) et,

- d'autre part, en ce que les traverses (9, 10) reposent directement sur la face supérieure (17, 18) des longerons (2, 3) du châssis,

- de même qu'en ce que sur les longerons (2, 3), sont répartis selon le même espacement que celui d'au moins certaines des traverses et, fixés par leur semelle (22) des corbeaux (19, 20) dont la face d'appui est située à un niveau légèrement inférieur à celui de la face inférieure des traverses (9, 10) et auxquels corbeaux (19, 20) les traverses (9, 10) sont reliées par des moyens de fixation (23).

2. Véhicule caractérisé en ce qu'il comprend un plateau selon la revendication 1.

0035449

Fig._1

# Fig. _4

## DOCUMENTS CONSIDERES COMME PERTINENTS

| Catégorie | Citation du document avec indication, en cas de besoin, des parties pertinentes | Revendication concernée |
|---|---|---|
| | FR - A - 1 523 442 (GENEVE) <br> * Résumé; figure * <br> -- | 1 |
| | FR - A - 2 240 138 (WACKENHUT) <br> * Revendications; figure 1 * <br> -- | 1 |
| | GB - A - 2 004 506 (LYSAGHT) <br> * En entier * <br> -- | 1 |
| | US - A - 2 540 400 (McHENRY) <br> * En entier * <br> -- | 1 |
| A | DE - A - 1 405 869 (D.B.) | 1 |
| A | DE - B - 1 080 418 (ALUMINIUM WALG WERKE SINGEN) | |
| A | US - A - 3 738 678 (KING et al.) | 1 |
| A | US - A - 3 909 059 (BENNINGER et al.) | 1 |
| A | GB - A - 644 187 (ELECTROGRAPHIC CORP.) | 1 |
| A | US - A - 3 185 519 (TURNBULL et al.) | 1 |
| A | GB - A - 739 400 (SOUTHERN FORGE) | 1 |
| | ---- | |

**CLASSEMENT DE LA DEMANDE (Int. Cl. 3)**

B 62 D 25/20
27/06
33/02

**DOMAINES TECHNIQUES RECHERCHES (Int. Cl. 3)**

B 62 D

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 06-04-1981 | SCHMAL |

OEB Form 1503.1 06.78